# EUROPEAN PATENT APPLICATION

(11) **EP 1 804 515 A2**
(43) Date of publication of application: **04.07.2007**
(21) Application number: 07100013.7
(22) Date of filing: 02.01.2007
(51) Int. Cl.: H04N 7/24

(54) **Method and apparatus for generating a license**

(30) Priority: 03.01.2006 US 755091 P; 28.03.2006 KR 20060028024
(71) Applicant: SAMSUNG ELECTRONICS CO., LTD., Suwon-si, Gyeonggi-do (KR)
(72) Inventor: Yoon, Young-sun, Suwon-si, Gyeonggi-do (KR); Kim, Bong-seon 903-411 Cheongsol Maeul Jugong, Seongnam-si, Gyeonggi-do (KR); Nam, Su-hyun, Seoul (KR)
(74) Representative: Robinson, Ian Michael

(57) **Abstract**

A method and apparatus for protecting digital content in a digital rights management (DRM) system are provided. The method includes: determining a usage bind of content based on usage constraint information of the content; and generating a license of the content for each usage bind. According to the method and apparatus, by generating the license of the content with respect to each usage bind, the content can be protected in a variety of ways with respect to the usage bind of the content, in addition to the conventional content protection by usage constraint information.

## Description

The present invention relates to digital content protection, and more particularly, to protection of digital content in a digital rights management (DRM) system.

As the world is moving from the analog age to the digital age, more contents are being created in digitized forms. While copying of analog content requires much time and effort, digital content can be copied more easily and quickly.

Also, while the quality of the analog content is degraded in proportion to the copying frequency of, the quality of the digital content remains constant regardless of the frequency of copying. Accordingly, the ability to protect digital content is desirable and a variety of research projects for developing ways to protect digital content are being pursued.

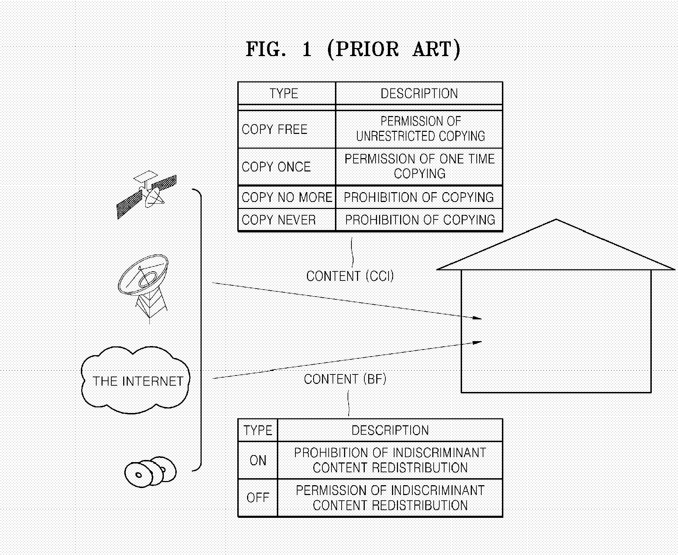

Figure 1 illustrates a conventional digital content protection environment.

Referring to Figure 1, in the conventional digital content protection environment, a transmission stream is received through a variety of broadcasting transmission channels and digital content is designed to be protected by using information included in the transmission stream.

In particular, a U.S. organization, Cable Television Laboratories, Inc. (CableLabs), has proposed that copy control information (CCI) be attached to digital content in order to control copying of the content. The CCI is two-bit information to restrict the number of times digital content may be copied. The types of the CCI includes "copy free" (00), "copy once" (01), "copy no more" (10) and "copy never" (11). "Copy free" indicates that copying the content is permitted without restriction. "Copy once" indicates that only one time copying is permitted. If content with a CCI being "copy once" (01) is copied, the CCI of this content becomes "copy no more" (10). "Copy never" indicates a total prohibition of copying the content.

Also, in order to prohibit indiscriminant redistribution of high definition (HD)-level digital content broadcast in the U.S., the U.S. Federal Communications Commission (FCC) ordered that a broadcast flag should be attached to the digital content. The broadcast flag is one-bit information indicating whether indiscriminant redistribution of digital content is prohibited. The types of broadcast flag include broadcast flag on (1), and broadcast flag off (0). Broadcast flag on indicates that indiscriminant redistribution of digital content is not permitted, while broadcast flag off indicates that indiscriminant redistribution of the digital content is permitted.

However, since the conventional methods of protecting digital content, such as the CCI and the broadcast flag, are very simple and limited in their expressions, it is difficult to protect digital content in a manner sufficient to satisfy the requirements of content consumers to freely use the content.

According to the present invention there is provided an apparatus and method as set forth in the appended claims. Preferred features of the invention will be apparent from the dependent claims, and the description which follows.

The present invention provides an apparatus and method capable of protecting digital content in a variety of ways in response to the requirement of users for free use of the content.

The present invention also provides a computer readable recording medium having embodied thereon a computer program for executing the method in a computer system.

According to an aspect of the present invention, there is provided a method of generating a license including: determining a usage bind of content based on information of the content; and generating a license of the content for each determined usage bind.

According to another aspect of the present invention, there is provided a license generation apparatus including: a usage bind determination unit determining a usage bind of content based on information of the content; and a license generation unit generating a license of the content for each determined usage bind.

According to still another aspect of the present invention, there is provided a computer readable recording medium having embodied thereon a computer program for executing the method of generating a license.

The above and other aspects of the present invention will become more apparent by describing in detail exemplary embodiments thereof with reference to the attached drawings in which:
Figure 1 illustrates a related art digital content protection environment;
Figure 2 illustrates a digital content protection environment according to an exemplary embodiment of the present invention;
Figure 3 illustrates a structure of a content import apparatus according to an exemplary embodiment of the present invention;
Figure 4 illustrates a mapping table of usage constraints information and/or usage control information according to an exemplary embodiment of the present invention;
Figure 5 illustrates a mapping table of usage constraints information and/or usage rules according to an exemplary embodiment of the present invention;
Figure 6 illustrates a format of a license according to an exemplary embodiment of the present invention; and
Figures 7A and 7B are flowcharts illustrating a license generation method according to an exemplary embodiment of the present invention.

The aspects of present invention will now be described more fully with reference to the accompanying drawings, in which exemplary embodiments of the invention are shown.

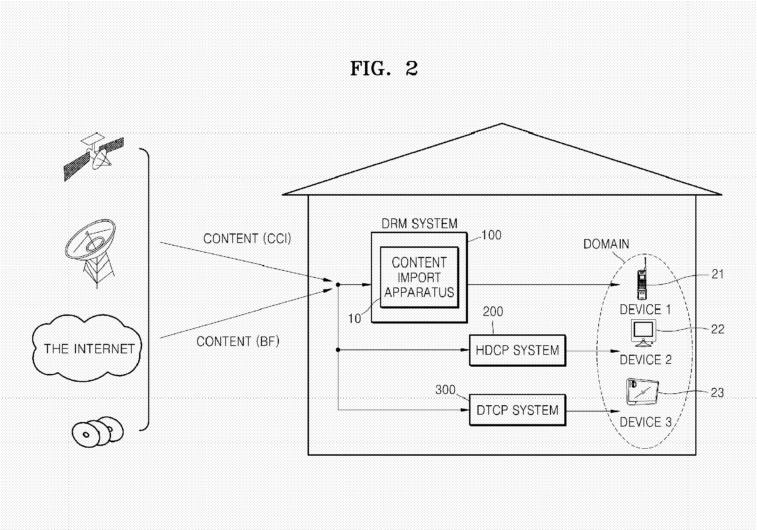

Figure 2 illustrates a digital content protection environment according to an exemplary embodiment of the present invention.

Referring to Figure 2, the digital content protection environment according to the exemplary embodiment of the present invention includes a variety of content protection systems, such as a digital rights management (DRM) system 100, a high bandwidth digital content protection (HDCP) system 200, and a digital transmission content protection (DTCP) system 300, and a plurality of devices 21-23 protected by these content protection systems.

The DRM system 100 is a system for managing the rights of content received from the outside. The HDCP system 200 is a system for preventing copying of digital content output to a digital display through a high bandwidth interface, such as a digital video interface (DVI). The DTCP system 300 is a system for preventing copying of digital content transmitted through a universal serial bus (USB) complying with Institute of Electrical and Electronics Engineers (IEEE) 1394 standard. In addition to these content protection systems, other content protection systems such as a conditional access system (CAS), and a content protection for recordable media (CPRM) system, may be further included, which can be easily understood by a person skilled in the art.

In particular, according to the present exemplary embodiment, the DRM system 100 includes a content import apparatus 10 which imports digital content, which is protected by the conventional methods of the copy control and the broadcast flag, as digital content complying with a rule of the DRM system 100 designed so that the rule can satisfy the security requirement of content owners, content providers and service providers, and at the same time can satisfy the requirement of content consumers for free usage of content.

The importing of content in the present exemplary embodiment means a process that a license for content is generated and the content is encrypted according to the rule of the DRM system 100. That is, in the present exemplary embodiment, the importing of content is a process of converting a content file that does not comply with the rule of the DRM system 100 into a content file that complies with the rule of the DRM system 100. Also, in the present exemplary embodiment, re-importing of content means a process that a device 21-23 receiving an already imported content file generates a new license based on the import type determined at the import process included in the content file. In the present exemplary embodiment, the content file is a file including digital content, and CCI or license for the content. In particular, a person skilled in the art of the present embodiment will understand that the term, "a content file", can also be simply called "content".

A "usage bind" as used herein, essentially corresponds to a defined usage category or scope. Considered herein are at least two categories, the first where usage is confined to a particular device , which will be referred to as a "device bound," and a second where usage is confined to a particular domain which may include a variety of devices, which will be referred to as a "domain bound." Usage rule is a concept including usage rights, i.e., usage permission or constraints.

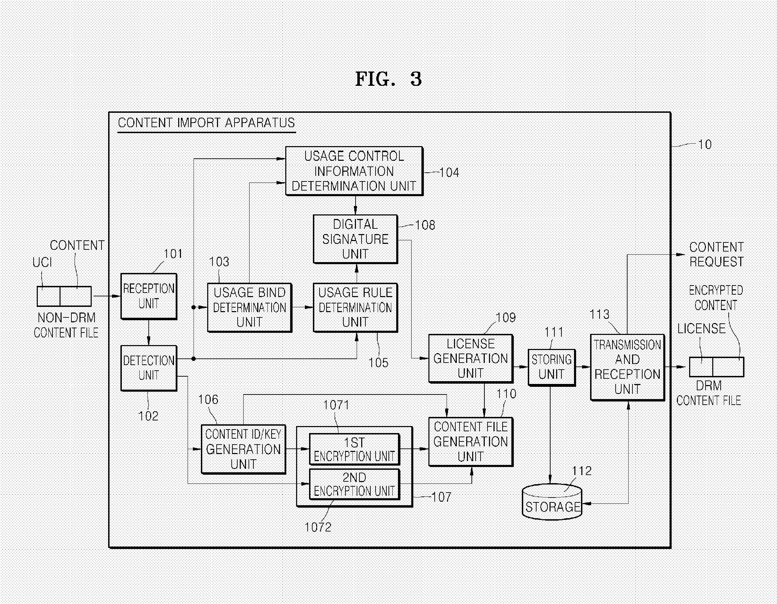

Figure 3 illustrates a structure of a content import apparatus according to an exemplary embodiment of the present invention.

Referring to Figure 3, the content import apparatus 10 illustrated in Figure 2 includes a reception unit 101, a detection unit 102, a usage bind determination unit 103, a usage control information determination unit 104, a usage rule determination unit 105, a content ID/key generation unit 106, an encryption unit 107, a first encryption unit 1071, a second encryption unit 1072, an digital signature unit 108, a license generation unit 109, a content file generation unit 110, a storing unit 111, a storage 112 and a transmission and reception unit 113.

The reception unit 101 receives a transmission stream through a variety of broadcast transmission channels. For example, the reception unit 101 may receive a transmission stream through a wireless medium such as a satellite and a ground base station, or through a wired medium such as the Internet, or through a recording medium such as a digital versatile disk (DVD).

The detection unit 102 detects the content file from the transmission stream received by the reception unit 101, and detects the digital content and usage constraints information (UCI) of this content from the content file. The content file detected by the detection unit 102 typically does not comply with the rule of the DRM system 100 and includes the conventional CCI or broadcast flag. As illustrated in Figure 2, the content included in this content file may be protected by the DRM system 100 or may be protected by the conventional HDCP system 100 or DTCP system 300. However, in order to protect the content included in this content file by the DRM system 100, the content file detected by the detection unit 102 should be imported as a content file complying with the rule of the DRM system 100.

Examples of the UCI may include conventional CCI and the broadcast flag. As described above, the CCI is information to restrict the number of times digital content may be copied. The types of the CCI include "copy free", "copy once", "copy no more" and "copy never". Also, the broadcast flag is information indicating whether indiscriminant redistribution of the content is prohibited. The types of the broadcast flag include broadcast flag on and broadcast flag off.

However, since "copy no more" is CCI occurring when digital content is copied once, the DRM system 100 cannot receive digital content when the CCI indicates "copy no more", and as a result, the DRM system 100 cannot import the content. This is because the DRM system 100 is a content protection system which receives for the first time a transmission stream through a variety of broadcast transmission channels as illustrated in Figure 2, and thus, the DRM system 100 cannot receive content when the CCI indicates "copy no more". Also, since "copy never" indicates a prohibition on copying the content, the DRM system 100 cannot copy content with the CCI which indicates "copy never", and as a result, cannot import content with the CCI which indicates "copy never". This is because in order to import digital content, the DRM system 100 should copy the content included in a content file which does not comply with the rule of the DRM system 100 and then include the copied content in a content file which complies with the rule of the DRM system 100.

Also, if the broadcast flag of content is broadcast flag off, indiscriminant redistribution of the content is permitted and protection of the content by the DRM system 100 is not needed. Accordingly, the DRM system 100 does not need to import the content with broadcast flag off. That is, according to the present exemplary embodiment, the content import apparatus 100 does not import content when the CCI is "copy no more" or "copy never", or content with the broadcast flag being broadcast flag off. Accordingly, the case where the CCI of content is "copy no more" or "copy never", or the broadcast flag of content is broadcast flag off will be excluded in the following description of the exemplary embodiments of the present invention.

The usage bind determination unit 103 determines a usage bind of the content detected by the detection unit 102 based on the UCI detected by the detection unit 102 according to the rule of the DRM system 100. This will now be explained with an example in which the UCI detected by the detection unit 102 is CCI. That is, if the CCI detected by the detection unit 102 is "copy free", the usage bind determination unit 103 determines the usage bind of the content to be a device-bound which limits the usage bind of content to any one device or a domain-bound which limits the usage bind of the content to all devices included in any one domain. Also, if the CCI detected by the detection unit 102 is "copy once", the usage bind determination unit 103 determines the usage bind of the content to be a device-bound according to the rule of the DRM system 100.

Since "copy free" indicates that indiscriminant copying of content is permitted, the usage bind may be either of a device-bound and a domain-bound.

However, since "copy once" indicates that only one time copying of the content is permitted, the usage bind can be only a device-bound. This is because if the usage bind of the content is determined as a domain-bound, free copying of the content among devices included in the domain should be permitted.

Next, an example in which the UCI detected by the detection unit 102 is the broadcast flag will now be explained. That is, if the broadcast flag detected by the detection unit 102 is broadcast flag on, the usage bind determination unit 103 determines the usage bind of the content to be a device-bound or a domain-bound according to the rule of the DRM system 100. Since if the broadcast flag is broadcast flag on, it indicates that indiscriminant redistribution of the content is not permitted, the usage bind may be a device-bound or a domain-bound. This is because the usage of the content within a device-bound complies with the prohibition of indiscriminant redistribution of the content, and since a domain-bound is a specified area that can be recognized by a user, the usage of the content within the domain-bound also complies with the prohibition of indiscriminant redistribution of the content.

Generally, since which domain is composed of devices which are preset by a user, a domain-bound can also be expressed as a user-bound. Also, as described above, since the rule of the DRM system 100 is determined in a manner such that the rule can satisfy the security requirement of content owners, content providers and service providers, and at the same time can satisfy the requirement of content consumers for free usage of content, the usage bind determination unit 103 determines the usage bind of the content as a device-bound or a domain-bound in this manner. However, the device-bound is determined only when the domain-bound violates the UCI, because the content usage right of a user can be restricted.

The usage control information determination unit 104 determines usage control information (content control information) of the content detected by the detection unit 102 based on the UCI detected by the detection unit 102 according to the rule of the DRM system 100. More specifically, the usage control information determination unit 104 determines usage control information of the content with respect to each usage bind determined by the usage bind determination unit 103. If the usage bind determined by the usage bind determination unit 103 is a device-bound, the usage control information determination unit 104 determines usage control information of the content in any one device. If the usage bind determined by the usage bind determination unit 103 is a domain-bound, the usage control information determination unit 104 determines usage control information of the content in any one domain.

Since the rule of the DRM system 100 is determined in a manner such that the rule can satisfy the security requirement of content owners, content providers and service providers, and at the same time can satisfy the requirement of content consumers for free usage of content, the usage control information determination unit 104 determines the usage control information of the content consistent with this manner.

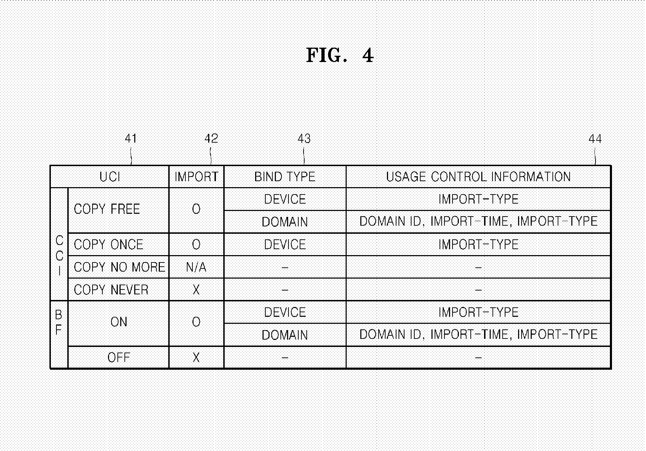

Figure 4 illustrates a mapping table of usage constraints information (UCI) and/or usage control information according to an exemplary embodiment of the present invention;

Referring to Figure 4, the mapping table of UCI and/or usage control information according to the present exemplary embodiment includes a UCI field 41, an import field 42, a bind type field 43, and a usage control information field 44.

In the UCI field 41, the UCI is recorded. In the import field 42, a value is recorded that indicates whether the content having the UCI recorded in the UCI field 41 can be imported. In the bind type field 43, a usage bind based on the UCI recorded in the UCI field is recorded. In the usage control information field 44, user control information based on the UCI recorded in the UCI field 41 with respect to each usage bind recorded in the bind type field 43, is recorded.

In particular, among the values recorded in the usage control information field 44, "domain ID" indicates any one domain. A device 21-23 that receives an imported content file determines, with reference to this domain ID, whether the device is included in a domain corresponding to the usage bind of the content included in the imported file. That is, if the device 21-23 that receives the imported content file is registered in the domain corresponding to the domain ID, the device determines that the device is included in the domain corresponding to the usage bind of the content included in this content file.

Also, among the values recorded in the usage control information field 44, "import-time" indicates a time to issue a license according to the present exemplary embodiment. That is, "import-time" indicates a time when the content file is imported as a content file complying with the rule of the DRM system 100. The device 21-23 receiving the content file determines, with reference to this import time, whether a membership for the domain corresponding to the usage bind of the content included in this content file has expired.

That is, if this import time is within a valid term of the membership for the domain corresponding to the usage bind of the content included in this content file, the device 21-23 determines that the membership has not expired.

Also, among the values recorded in the usage control information field 44, "import-type" indicates the inherited bind type of content based on te UCI associated with the content which provides information to determine the bind type of the content included in a new license according to the present exemplary embodiment. That is, when a content file including UCI is imported as a content file including a license and then, a content file is re-imported from the content file including this license, the value "import-type" indicates the inherited bind type of content included in the re-imported content file. The device 21-23 receiving the content file determines the usage bind of content included in the new license with reference to this import type when the already imported content file is re-imported. That is, if the import type is of the value user-specific to indicate the bind type as domain boud, the device 21-23 receiving the content file determines the usage bind of the content included in the content file re-imported from the already imported content file as a domain-bound.

The usage rule determination unit 105 determines a usage rule of the content detected by the detection unit 102 based on the UCI detected by the detection unit 102 according to the rule of the DRM system 100. More specifically, the usage rule determination unit 105 determines a usage rule of the content with respect to each usage bind determined by the usage bind determination unit 103. If the usage bind determined by the usage bind determination unit 103 is a device-bound, the usage rule determination unit 105 determines a usage rule of the content in any one device. If the usage bind determined the usage bind determination unit 103 is a domain-bound, the usage rule determination unit 105 determines a usage rule of the content in any one domain.

Since the rule of the DRM system 100 is determined such that the rule can satisfy the security requirement of content owners, content providers and service providers, and at the same time can satisfy the requirement of content consumers for free usage of content, the usage rule determination unit 105 determines the usage rule of the content in this manner.

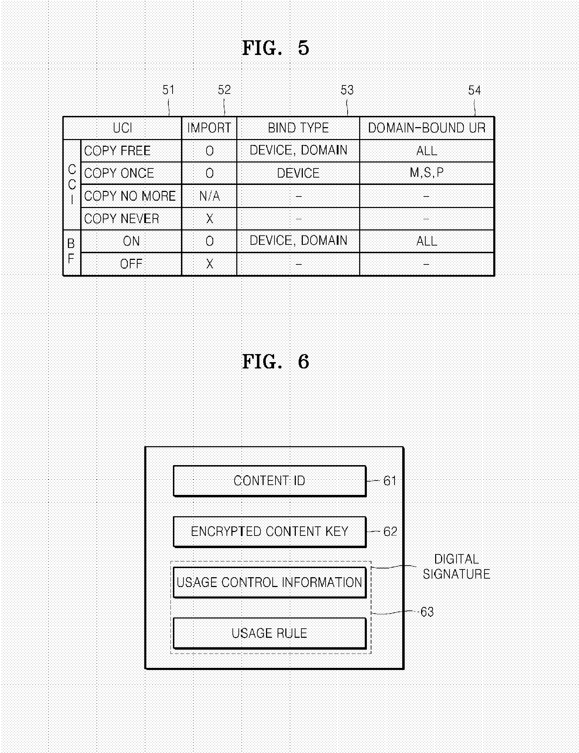

Figure 5 illustrates a mapping table of UCI and/or usage rules according to an exemplary embodiment of the present invention.

Referring to Figure 5, the UCI/UR mapping table according to the exemplary embodiment of the present invention includes a UCI field 51, an import field 52, a bind type field 53, and a usage rule field 54.

UCI is recorded in the UCI field 51. In the import field 52, a value is recorded that indicates whether the content having the UCI recorded in the UCI field 51 can be imported. In the bind type field 53, a usage bind based on the UCI recorded in the UCI field is recorded. In the usage rule field 54, a usage rule is recorded and is based on the UCI recorded in the UCI field with respect to the usage bind recorded in the bind type field 53.

In particular, among values recorded in the usage rule field 54, "all" indicates that all types of usages of content are permitted. Also, among values recorded in the usage rule field 54, "M" indicates moving of content. The moving of the content means that the content stored in any one device is deleted or the usage of the content is prohibited when the content is stored in another device. Also, among values recorded in the usage rule field 54, "S" indicates streaming of content. The streaming of the content means that the content stored in any one device is temporarily output to another device but the content is continuously stored in the original device. Also, among values recorded in the usage rule field 54, "P" indicates playing of the content. The playing of the content means that any one device plays the content.

Since "copy free" indicates that indiscriminant copying of content is permitted, if the UCI is "copy free", device and domain are recorded in the bind type field 53 and "all" is recorded in the usage rule field 54. Meanwhile, since "copy once" indicates that only one time copying of content is permitted, if the UCI is "copy once", device is recorded in the bind type field 53 and "M, S, P" is recorded in the usage rule field 54.

In addition to the moving, streaming and playing, examples of using content includes copying content. The copying of content means that content imported according to the exemplary embodiment of the present invention is copied. However, in order for the content import apparatus 10 to import the content, copying of the content is required as a prerequisite and as a result, if the content imported according to the present embodiment is copied, the of copying occurs twice.

Accordingly, though the content import apparatus 10 can import content with the UCI being "copy once", the content import apparatus 10 cannot permit copying of the content. This is the reason why only "M, S, P" is recorded in the usage rule field 54 when the UCI is "copy once".

Since broadcast flag on indicates that indiscriminant redistribution of content is not permitted, if the broadcast flag is broadcast flag on, device and domain are recorded in the bind type field 53 and "all" is recorded in the usage rule field 54.

Any type of usage in a device-bound, including copying of content, complies with the prohibition of indiscriminant redistribution of the content, and since a domain-bound is a specified area that can be recognized by a user, any type of usage in the domain-bound, including copying of the content, complies with the prohibition of indiscriminant redistribution of the content.

The content ID/key generation unit 106 generates the ID of content detected by the detection unit 102 according to the rule of the DRM system 100 and generates a content key corresponding to this content ID. The content key generated by the content ID/key generation unit 106 is used to encrypt the content detected in the detection unit 102.

The encryption unit 107 selectively encrypts the content detected by the detection unit 102 according to the rule of the DRM system 100 based on the UCI detected by the detection unit 102. That is, if the CCI is "copy no more", or "copy never", or the broadcast flag is broadcast flag off, the content import apparatus 10 does not import the content, and therefore the encryption unit 106 does not encrypt the content detected by the detection unit 102. The encryption unit 106 includes the first encryption unit 1071 for encrypting a content key and the second encryption unit 1072 for encrypting content.

The first encryption unit 1071 encrypts the content key generated by the content ID/key generation unit 106 with an encryption key corresponding to a usage bind determined by the usage bind determination unit 103. If the usage bind determined by the usage bind determination unit 103 is a device-bound, the first encryption unit 1071 encrypts the content key with an encryption key (hereinafter referred to as a "device key") corresponding to any one device. If the usage bind determined by the usage bind determination unit 103 is a domain-bound, the first encryption unit 1071 encrypts the content key with an encryption key (hereinafter referred to as a "domain key") corresponding to any one domain.

Accordingly, among devices which receive the content imported by the content import apparatus 10, only a device having a device key or domain key used to encrypt the content keys can decrypt the content keys encrypted by the first encryption unit 1071. Through this encryption process only users authorized for the content can be selectively allowed to use the content and the danger of the content being illegally redistributed or used by many and unspecified persons can be effectively prevented.

For example, in order to allow only a device or domain selected by a user to obtain a content key, the first encryption unit 1071 only needs to encrypt the content key with a device key corresponding to a device selected by the user or with a domain key corresponding to a domain selected by the user. However, the first encryption unit 1071 should know which device corresponds to which encryption key, and information on this relation can be obtained from a server, such as a domain manager (not shown).

The second encryption unit 1072 encrypts the content detected by the detection unit 102 with the content key generated by the content ID/key generation unit 106.

The digital signature unit 108 digitally signs the usage control information determined by the usage control information determination unit 104, and the usage rule determined by the usage rule determination unit 105 according to the rule of the DRM system 100. Generally, an digitalsignature is used to guarantee that a document or message is not falsified. If the usage control information determined by the usage control information determination unit 104, and the usage rule determined by the usage rule determination unit 105 are falsified, the security requirement of content owners, content providers and service providers cannot be satisfied and as a result, the content protection function of the DRM system 100 fails to operate correctly.

The license generation unit 109 generates a license including the content ID generated by the content ID/key generation unit 106, the content key encrypted by the first encryption unit 1071, and the usage control information and usage rule digitally signed by the digital signature unit 108. More specifically, the license generation unit 109 generates the license including the usage rule determined by the usage rule determination unit 105 with respect to each usage bind determined by the usage bind determination unit 103. If the usage bind determined by the usage bind determination unit 103 is a device-bound, the license generation unit 109 generates a license for any one device. If the usage bind determined by the usage bind determination unit 103 is a domain-bound, the license generation unit 109 generates a license for any one domain.

Figure 6 illustrates a format of a license according to an exemplary embodiment of the present invention.

Referring to Figure 6, the license includes a content ID 61, an encrypted content key 62, digitally signed usage control information and usage rules 63.

A device which receives the content imported by the content import apparatus 10 can identify the content imported by the content import apparatus 10 by referring to the content ID 61 of the license illustrated in Figure 6. Also, in order to obtain the identified content, the device which receives the content imported by the content import apparatus 10 attempts to decrypt the encrypted content key 62 of the license illustrated in Figure 6. As described above, among devices receiving the content imported by the content import apparatus 10, only a device having the device key or domain key used to encrypt the content key can decrypt the encrypted content key 62. Also, the device receiving the content imported by the content import apparatus 10 decrypts the content with the key restored through the decryption. This is because the content imported by the content import apparatus 10 is in an encrypted form as described above.

Also, the device receiving the content imported by the content import apparatus 10 confirms whether the digitally signed usage control information and usage rule 63 of the license illustrated in Figure 6 is falsified. As a result, if it is conformed that the digitally signed usage control information and usage rule 63 are not falsified, it is confirmed, based on the usage control information, whether the user is authorized for the content. That is, the device receiving the content imported by the content import apparatus 10 confirms with reference to the domain ID and the import time included in the usage control information whether the user is authorized for the content in relation to the domain corresponding to the usage bind of the content. As a result, if it is confirmed that the user is authorized for the content, the device receiving the content imported by the content import apparatus 10 uses the content according to the usage rule included in the license illustrated in Figure 6. Accordingly, the security requirement of content owners, content providers and service providers can be satisfied and at the same time the requirement of content consumers for free usage of the content can be satisfied sufficiently.

The content file generation unit 110 generates a content file complying with the usage rule determined by the usage rule determination unit 105 according to the rule of the DRM system 100. This is to allow the device receiving the content imported by the content import apparatus 10 to use the content complying with the usage rule determined by the usage rule determination unit 105. As described above, the usage rule determined by the usage rule determination unit 105 is inserted into the license issued by the license generation unit 109. That is, the content file generation unit 110 generates a content file including the license issued by the license generation unit 109 and the content encrypted by the second encryption unit 1072. However, the license issued by the license generation unit 109 and the content encrypted by the second encryption unit 1072 may be packaged as one unit or as separate units.

The storing unit 111 stores the content file generated by the content file generation unit 110 in the storage 112.

If a request from any one of the devices 21-23 illustrated in Figure 2 to transmit the content to the device is received, the transmission and reception unit 113 transmits the content file stored in the storage 112 to this device. The transmission and reception unit 111 may transmit the content file in an arbitrary method that the device supports. For example, the content may be transmitted through a storage medium, such as a secure digital (SD) card, or according to a transmission protocol, such as a real-time transport protocol (RTP).

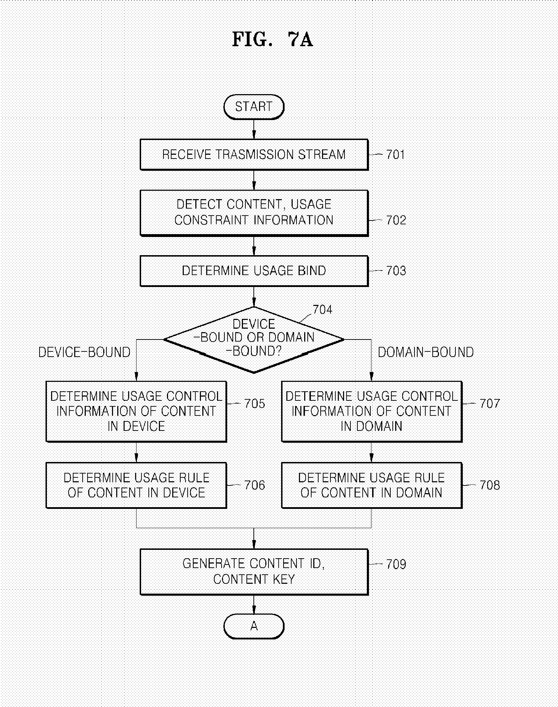

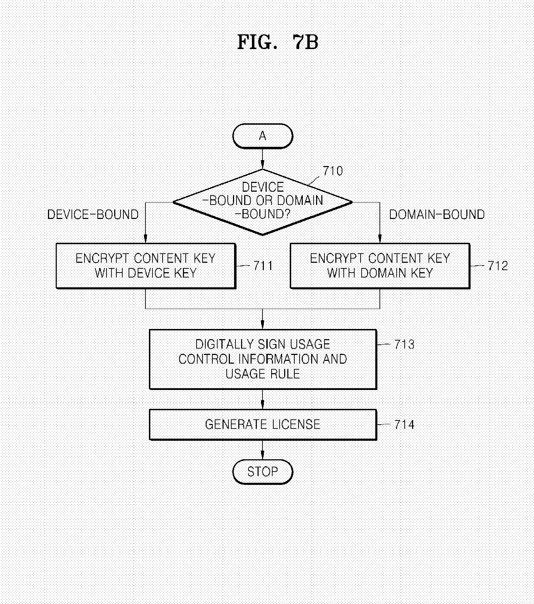

Figures 7A and 7B are flowcharts illustrating a license generation method according to an exemplary embodiment of the present invention.

Referring to Figures 7A and 7B, the license generation method according to the present exemplary embodiment includes operations performed in a time series in the content import apparatus 10 illustrated in Figure 3. Accordingly, the explanation described above in relation to the content import apparatus 10 illustrated in Figure 3, though it may be omitted below, is also applied to the license generation method according to the present exemplary embodiment.

In operation 701, the content import apparatus 10 receives a transmission stream through a variety of broadcast transmission channels.

In operation 702, the content import apparatus 10 detects any one content file from the transmission stream received in operation 701, and detects any one digital content and usage constraints information (UCI) with respect to this content from the content file.

In operation 703, the content import apparatus 10 determines the usage bind of the content detected by the detection unit 102 based on the UCI detected by the detection unit 102 according to the rule of the DRM system 100.

In operation 704, if the usage bind determined in operation 703 is the device-bound, the content import apparatus 10 performs operation 705 and if it is the domain-bound, the content import apparatus 10 performs operation 707.

In operation 705, the content import apparatus 10 determines usage control information of the content in any one device based on the UCI detected in operation 702 according to the rule of the DRM system 100.

In operation 706, the content import apparatus 10 determines the usage rule of the content in any one device based on the UCI detected in operation 702 according to the rule of the DRM system 100.

In operation 707, the content import apparatus 10 determines the usage control information of the content in any one domain based on the UCI detected in operation 702 according to the rule of the DRM system 100.

In operation 708, the content import apparatus 10 determines the usage rule of the content in any one domain based on the UCI detected in operation 702 according to the rule of the DRM system 100.

In operation 709, the content import apparatus 10 generates the ID of the content detected in operation 702 and generates a content key corresponding to this content ID according to the rule of the DRM system 100.

In operation 710, illustrated in Figure 7B, if the usage bind determined in operation 703 is a device-bound, the content import apparatus 10 performs operation 711 and if it is a domain-bound, the content import apparatus 10 performs operation 712.

In operation 711, the content import apparatus 10 encrypts the content key with a device key corresponding to any one device according to the rule of the DRM system 100.

In operation 712, the content import apparatus 10 encrypts the content key with a domain key corresponding to any one domain according to the rule of the DRM system 100.

In operation 713, the content import apparatus 10 digitally signs the UCI determined in operations 705 and 707 and the usage rule determined in operations 706 and 708 according to the rule of the DRM system 100.

In operation 714, according to the rule of the DRM system 100 the content import apparatus 10 generates a license including the content ID generated in operation 709, the content key encrypted in operations 711 and 712, and the usage control information and usage rule digitally signed by the digital signature unit 108.

The present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet).

According to the present invention, the usage bind of the content is determined based on the UCI of the content, and a license of the content is generated with respect to the usage bind of the content. By doing so, the content can be protected in a variety of ways in addition to the limited content protection by the conventional copying control and broadcast flag. That is, according to the exemplary embodiments of the present invention, a license for a device-bound or a domain-bound is generated such that the content can be protected according to the device-bound or domain-bound.

In particular, according to the exemplary embodiments of the present invention, the usage control information and usage rule are determined with respect to each usage bind of the content and a license including the information and the rule is generated. Accordingly, the content can be used in the usage bind of the content such that the security requirement of content owners, content providers and service providers can be satisfied and at the same time the requirement of content consumers for free usage can be satisfied sufficiently.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of generating a license, the method comprising:
determining a usage bind of content based on information of the content; and
generating a license of the content for the determined usage bind.

2. The method of claim 1, wherein the information is usage constraints information, and in the determining of the usage bind of the content the usage bind is determined based on the usage constraint information.

3. The method of claim 2, wherein the usage constraints information is information to restrict a number of times of the content may be copied.

4. The method of claim 2, wherein the usage constraints information is information indicating whether indiscriminant redistribution of the content is prohibited.

5. The method of any preceding claim, wherein in the determining of the usage bind of the content, the usage bind of the content is determined to be a device-bound that limits the usage bind to a device or a domain-bound that limits the usage bind to all devices included in a domain, and
the generating of the license of the content comprises generating a license for the device-bound or for the domain-bound.

6. The method of any preceding claim, further comprising determining usage control information of the content for the determined usage bind,
wherein the generating of the license of the content comprises generating a license including the determined usage control information.

7. The method of claim 6, wherein the determining of the usage control information of the content comprises, if the usage bind of the content is determined as a device-bound, determining usage control information in the device.

8. The method of claim 7, wherein if a first content file including the information is imported as a second content file including the license, the usage control information in the device comprises information indicating a usage bind of content included in a third content file which is re-imported from the second content file.

9. The method of claim 6, wherein the determining of the usage control information of the content comprises, if the usage bind of the content is determined as a domain-bound which limits the usage bind to any one domain, determining usage control information in the domain.

10. The method of claim 9, wherein usage control information in the domain-bound comprises:
a domain identification (ID) indicating the domain;
an import time when a first content file including the information is imported as a second content file including the license; and
an import type of content providing the information to determine the usage bind of content included in a third content file which is re-imported from the second content file.

11. The method of any preceding claim, further comprising determining a usage rule of the content with respect to the determined usage bind,
wherein the generating of the license of the content comprises generating a license including the determined usage rule.

12. A license generation apparatus comprising:
a usage bind determination unit (103) which determines a usage bind of content based on information of the content; and
a license generation unit (109) which generates a license of the content for the determined usage bind.

13. The apparatus of claim 12, wherein the information is usage constraint information, and the usage bind determination unit (103) determines the usage bind based on the usage constraint information.

14. The apparatus of claim 12 or 13, wherein the usage bind determination unit (103) determines the usage bind of the content to be a device-bound that limits the usage bind to any one device or a domain-bound that limits the usage bind to all devices included in any one domain, and
the license generation unit (109) generates a license for the device-bound or for the domain-bound.

15. The apparatus of claim 12, 13 or 14, further comprising a usage control information unit which determines usage control information of the content with respect to the determined usage bind,
wherein the license generation unit (109) generates a license including the determined usage control information.

16. The apparatus of claim 12, 13, 14 or 15, further comprising a usage rule determination unit which determines a usage rule of the content with respect to the determined usage bind,
wherein the license generation unit (109) generates a license including the determined usage rule.

17. The apparatus of claim 15, further comprising:
a usage rule determination unit (105) which determines a usage rule of the content with respect to the determined usage bind; and
a digital signature unit (108) which digitally signs the usage control information and the usage rule,
wherein the license generation unit (109) generates a license including the determined usage control information signed by the digital signature unit (108) and the determined usage rule signed by the digital signature unit (108).

18. The apparatus of claim 16, further comprising a content file generation unit (110) which generates a content file including the license generated by the license generation unit (109).

19. A computer readable recording medium having embodied thereon a computer program for a method of generating a license, wherein the method comprises:
determining a usage bind of content based on information of the content; and
generating a license of the content for the determined usage bind.

20. A method of generating a license, the method comprising:
confirming usage constraints information of content;
determining a usage bind of the content based on the usage constraints information;
and
determining usage rule information based on the usage bind.

21. The method of claim 20, wherein the usage bind is a domain-bound or a device-bound.

22. The method of claim 21, wherein the usage rule information comprises an identifier (ID) of a domain and information about a time when the license was generated, if the usage bind is the domain-bound.

23. The method of claim 20, further comprising determining usage control information based on the usage contraints information.

24. A computer-readable recording medium storing a mapping table comprising:
a first domain which comprises a usage bind of content determined based on usage constraints information of the content; and
a second domain which comprises usage control information according to the usage bind of the content.

25. The computer-readable recording medium of claim 24, wherein the usage bind is a domain-bound or a device-bound.

26. The computer-readable recording medium of claim 25, wherein the usage control information comprises an identifier (ID) of the domain if the usage bind is the domain-bound.

27. The computer-readable recording medium of claim 26, wherein the usage control information further comprises information about a time that the usage control information was generated.

28. The computer-readable recording medium of claim 24, wherein the mapping table further comprises a third domain which comprises usage rule information determined based on the usage constraints information of the content.

29. A method of protecting content, the method comprising:
confirming usage constraints information of the content;
determining a usage bind of the content based on the usage constraints information;
encrypting the content using a content key; and
encrypting the content key based on the usage bind.

30. The method of claim 29, wherein the usage bind is device-bound or a domain-bound.

31. The method of claim 30, wherein the content key is encrypted with a device key of a device using the content, if the usage bind is the device-bound.

32. The method of claim 30, wherein the content key is encrypted with a domain key of a domain using the content, if the usage bind is the domain-bound.

33. The method of claim 29, further comprising generating a license of the content, wherein the license comprises the usage bind and the content key of the content.

34. The method of claim 33, wherein the license further comprises usage control information determined based on the usage bind and usage rule information determined based on the usage constraints information.

35. A method of converting content, the method comprising:
confirmation usage constraints information of the content;
generating a content key of the content;
encrypting the content using the content key; and
generating a license of the content based on the usage constraints information.

36. The method of claim 35, wherein the license comprises usage bind information of the content based on the usage constraints information.

37. The method of claim 36, wherein the license further comprises usage control information of the content based on the usage bind information.

38. The method of claim 37, wherein the license further comprises usage rule information based on the usage constraints information.

39. The method of claim 37, wherein the usage control information comprises information about an identifier (ID) of a domain and information about a time the license is generated, if the usage bind is a domain-bound.

40. A method of using content which can be used in any one of a plurality of domains, the method comprising:
determining a valid term of a membership for a domain; requesting usage of the content;
confirming a time that a license of the content is generated;
confirming whether the time that the license is generated is within the valid term.

41. The method of claim 40, wherein the content is encrypted with a content key, and the content key is encrypted with a domain key corresponding the domain.

42. The method of claim 41, wherein the license comprises information showing that the content can be used in the domain, the content key, information about the time that the license is generated, information about an identifier (ID) of the domain, and usage rule information of the content.
